# EUROPEAN PATENT APPLICATION

(11) **EP 1 595 585 A2**
(43) Date of publication of application: **16.11.2005**
(21) Application number: 05252938.5
(22) Date of filing: 12.05.2005
(51) Int. Cl.: A63F 13/10, A63F 13/12

(54) **Match game processing method, match game system, and storage medium thereof**

(30) Priority: 14.05.2004 JP 2004144935
(71) Applicant: SEGA CORPORATION, Ohta-ku, Tokyo 144-8531 (JP)
(72) Inventor: Iwasaki, Takeshi, Ohta-ku Tokyo 144-8531 (JP); Tamura, Hiroyasu, Ohta-ku Tokyo 144-8531 (JP); Shimoda, Noriyuki, Ohta-ku Tokyo 144-8531 (JP); Murayama, Tohru, Ohta-ku Tokyo 144-8531 (JP); Sato, Fuminori, Ohta-ku Tokyo 144-8531 (JP); Yamanaka, Junichi, Ohta-ku Tokyo 144-8531 (JP); Nakanishi, Wataru, Ohta-ku Tokyo 144-8531 (JP); IIzawa, Hitoshi, Ohta-ku Tokyo 144-8531 (JP); Sudou, Yutaka, Ohta-ku Tokyo 144-8531 (JP)
(74) Representative: Billington, Lawrence Emlyn

(57) **Abstract**

A match game processing method performs a match game having a plurality of stages by a plurality of players. By communicating among game apparatuses, a control unit controls to synchronize among the plays by the players in a virtual space, on a stage-by-stage basis. The game can be completed with a reduced waiting time of each player. Also, in a ghost match, the game proceeds in such a way that the control unit in the game apparatus performs a simple playback of a ghost data, according to the execution result obtained through the operation inputs from the player. Thus, in response to the execution result by the player, the ghost match is performed and the game time can be shortened.

## Description

### CROSS-REFERENCE TO RELATED APPLICATIONS

This application is based upon and claims the benefit of priority from the prior Japanese Patent Application No. 2004-144935, filed on May 14, 2004, the entire contents of which are incorporated herein by reference.

### BACKGROUND OF THE INVENTION

### 1. Field of the Invention

The present invention relates to a match game processing method, a match game system, and a storage medium therefor, by which a plurality of players play in an environment having a plurality of game apparatuses connected to a network.

### 2. Description of the Related Art

In the field of the game using a virtual space, there are used match games in which players, supplying operation instructions to each game apparatus, play matches using the virtual space through the connection of a plurality of game apparatuses connected by a network, etc. , thereby transmitting/receiving information among each game apparatus. A golf game and a driving race game are typically known.

In such a golf game or the like, conventionally, in order to enhance reality of the match, each player (game terminal) participating in the game simultaneously starts to play the game. At the time of each operation by each player or at the end of each hole, data including a result or a progress state of the game are uploaded to a server. The server collects the data from each game terminal, generates integrated data, and distributes the data to each game terminal. Such a method has been disclosed in the official gazette of the Japanese Unexamined Patent Publication No. Hei-11-319319.

Meanwhile, as a different form of such a match game, there is a conventional method for performing a simulated match play, as having been disclosed in the official gazette of the Japanese Unexamined Patent Publication Nos. 2002-301266 and 2003-320164. According to the conventional method disclosed above, a certain player plays a match play using the play data obtained from a play result of another person (such a play data is called a 'ghost data'). For example, a driving game machine uploads or downloads such a ghost data to/from a server. The server then evaluates the ghost data, ranks, and records the rank together with player names and a game machine ID or player ID codes, so as to output to the game machine from which a request was issued.

In such a game play (which is referred to as 'ghost play'), a play performed by a player simultaneously proceeds with a playback of the ghost data, and thereby the player can enjoy playing the match game in a simulated manner.

In such prior arts of the participation-type game play, each player can know information of other players (states of progress, results, etc.) at predetermined timing. However, in order to synchronize plays performed by each player on a shot-by-shot basis, it is necessary to adopt a form such that each player makes shots one after another, with a waiting time for the play of each player. Under such a form of play, differently from the actual golf play in which player plays with others on the spot, players are released from psychological restriction and restriction of progress when using the virtual space. This makes a longer total playing time, and a longer waiting time of the players as well.

Namely, as the number of game play participants increases, so the time per game round is increased. This may undesirably weaken players' interest, and may produce a risk of the decreased profit of amusement facilities.

Similarly, in the prior art of the simulated match game using the ghost data, a play performed by a player simultaneously proceed with a playback of a ghost data (produced by a ghost player). It is difficult to shorten the waiting time of a player while synchronizing the plays among the players, when the plays are performed in a plurality of stages like in the golf game. This may cause a risk of weakening players' interest.

### SUMMARY OF THE INVENTION

Accordingly, it is a first object of the present invention to provide a match game processing method, a match game system, and a storage medium thereof in a participation match game, shortening a waiting time of each player, while grasping a play state of each player.

Further, it is a second object of the present invention to provide a match game processing method, a match game system, and a storage medium thereof in a participation match game, enabling a match play by a multiplicity of participants, in which each player can play in a substantially same time as the time when the game is played by a player alone.

Still further, it is a third object of the present invention to provide a match game processing method, a match game system, and a storage medium thereof in a participation match game, virtually shortening a waiting time that a player feels even when the player concerned completes the game earlier than other match players.

Further, it is a fourth object of the present invention to provide a match game processing method, a match game system, and a storage medium thereof in a simulated match game, shortening a waiting time of a player while synchronizing the operations being input from players for each of a plurality of plays.

Further, it is a fifth object of the present invention to provide a match game processing method, a match game system, and a storage medium thereof in a simulated match game, enabling a simulated match play by a multiplicity of participants, in which each player can play in a substantially same time as the time when the game is played by one player, while synchronizing the operations being input from the players for each of a plurality of plays.

Still further, it is a sixth object of the present invention to provide a match game processing method, a match game system, and a storage medium thereof in a simulated match game, virtually shortening a waiting time that a player feels even when the player concerned completes the game earlier than other match players.

In order to achieve the aforementioned objects, according to the present invention, there is disclosed a match game processing method in which a game apparatus executes a game program sharing a common virtual space with other game apparatuses according to operation inputs from players, communicates the results of game program execution with the other game apparatuses, and outputs a match game result. The match game processing method includes: a step of instructing each player to perform the operation inputs on a stage-by-stage basis of the game program having a plurality of stages executed separately; a step of executing the game program based on the operation inputs from the player, and communicating the game execution results with the other game apparatuses, on the above stage-by-stage basis; a step of executing the game program by uniforming each game program stage among the plurality of game apparatuses, based on the game execution results obtained from the other game apparatuses through the communication in each of the plurality of game apparatuses; and a step of performing simple display of the received game execution results of the other game apparatuses in the above each stage.

Also, a storage medium according to the present invention stores a match game program for enabling each game apparatus to execute the above each step.

Further, according to the present invention, in a match game processing system in which a game apparatus executes a game program sharing a common virtual space with other game apparatuses according to the operation inputs from players, communicates the results of game program execution with the other game apparatuses, and outputs a match game result, the game apparatus includes: a communication unit communicating the execution results among the game apparatuses operated by the players; a display unit instructing each player to perform the operation inputs, on a stage-by-stage basis of the game program having a plurality of stages executed separately, and outputting the execution results; and a control unit executing the game program by uniforming each game program stage among the plurality of game apparatuses, based on the game execution results obtained from the other game apparatuses through the communication according to the executing the game program. And in the above each stage, the control unit simply displays on the display unit the game execution results of the other game apparatuses obtained through the communication.

According to the above-mentioned present invention, differently from the actual golf rules that a shot is hit from a player located furthest to the cup, the play herein proceeds so as to uniform the number of strokes among the whole players in each stage. As a result, it becomes possible to synchronize the plays stage by stage, and to enable a final completion of the game with a reduced waiting time of each player. Further, at the end of each stage, the received data of the opponents are simply played back on a screen of the player of interest, enabling the players to feel that they are actually playing the match.

Further, in the match game processing method according to the present invention, preferably, the step of performing the simple display further includes a step of displaying at least a state at the time of starting each stage, and a state produced by the play at the time of completing each stage. Also, preferably, the storage medium according to the present invention stores the match game program for enabling each game apparatus to execute the above step. Further, preferably, the match game processing system displays at least a state at the time of starting each stage, and a state of the execution result of the stage, so as to perform the simple display.

By this, the effect of simple display of the opponents increases, making the player have an enhanced feeling of playing the match.

Further, in the match game processing method according to the present invention, preferably, the step of performing the game program further includes: a step of detecting whether the operation inputs of a certain stage are completed within a time limit of the operation inputs of the stage; and a step of forcibly terminating the operation inputs of the stage, on detecting the operation inputs of the stage not being completed within the time limit of the operation inputs of the stage. Also, preferably, the storage medium according to the present invention stores the match game program for enabling each game apparatus to execute the above each step. Further, in the match game processing system according to the present invention, preferably, the control unit detects whether the operation inputs of a certain stage are completed within a time limit of the operation inputs of the stage, and on detecting the operation inputs of the stage not being completed within the time limit of the operation inputs of the stage, forcibly terminates the operation inputs of the stage.

By this, it becomes possible to shorten the waiting time of the player of interest which may otherwise be produced from delayed operations of the opponents.

In the match game processing method according to the present invention, the step of performing the game program further includes a step of displaying a standby screen on the game apparatus of which player has completed the operation inputs of the stage early, so as to perform chat communication with the game apparatuses of the other players. Also, preferably, the storage medium according to the present invention stores the match game program for enabling each game apparatus to execute the above each step. Further, in the match game processing system according to the present invention, preferably, the control unit displays a standby screen on the game apparatus of which player has completed the operation inputs of the stage early, so as to perform chat communication with the game apparatuses of the other players.

By this, it becomes possible for the player, having completed an operation input (play) earlier, to reduce feeling of the waiting time for the play of other players.

In the match game processing method according to the present invention, preferably, the game signifies a game of moving a moving object on a predetermined course by hitting the moving object from a start position to an end position of the course. Also, the stage signifies a stage of moving the moving object by hitting the moving object. Also, preferably, the storage medium according to the present invention stores the match game program for enabling each game apparatus to execute the above game. Further, preferably, in the match game processing system according to the present invention, preferably, the control unit performs the game for signifies a game of moving a moving object on a predetermined course by hitting the moving object from a start position to an end position of the course. Also, the stage signifies a stage of moving the moving object by hitting the moving object. stores the above match game program.

By this, it becomes possible to shorten the waiting time of each player in a game of operating a moving object including a golf game, in which a plurality of players participate, which also enables reduction of the game time.

In the match game processing method according to the present invention, preferably, the step for performing the game program further includes a step of forcibly terminating the game executed in the game apparatus of a player, of which scored number of strokes exceeds a stroke limit of the game which is determined based on the number of strokes scored by the operation of another player having moved to the end position of the course earlier. Also, preferably, the storage medium according to the present invention stores the match game program for enabling each game apparatus to execute the above each step. Further, in the match game processing system according to the present invention, preferably, the control unit forcibly terminates the game in the game apparatus of a player, of which scored number of strokes exceeds a stroke limit of the game which is determined based on the number of strokes scored by the operation of another player having moved to the end position of the course earlier.

By this, it becomes possible to prevent a delayed play in a game in which a plural of player participate, which enables the reduction of a waiting time more.

In the match game processing method according to the present invention, preferably, the step of performing the game further includes a step of forcibly terminating the game executed in the game apparatus of a player of which scored number of strokes exceeds a stroke limit being set to the course. Also, preferably, the storage medium according to the present invention stores the match game program for enabling each game apparatus to execute the above each step. Further, in the match game processing system according to the present invention, preferably, the control unit forcibly terminates the game executed in the game apparatus of a player of which scored number of strokes exceeds a stroke limit being set to the course.

By this, it becomes possible to prevent a delayed play in the game in which a plurality of player participates, which enables the reduction of a waiting time more.

In the match game processing method according to the present invention, preferably, the step of performing the simple display further includes a step of displaying a moving state of the moving object two-dimensionally on the course perspective. Also, preferably, the storage medium according to the present invention stores the match game program for enabling each game apparatus to execute the above each step. Further, in the match game processing system according to the present invention, preferably, the control unit displays on the display unit a moving state of the moving object two-dimensionally on the course perspective.

By this, it becomes possible to make simple display of other players more effective, enabling a more enhanced match effect.

Further, in the match game processing method according to the present invention, there is disclosed a match game processing method in which a game apparatus executes a game program using a virtual space, having a plurality of players participating therein, according to operation inputs from the players, and outputs a match game result from the result of game program execution. The match game processing method includes: a step of acquiring ghost data representing past execution results of a plurality of stages of the game program in the game apparatus operated by a player; a step of instructing the player to perform the operation inputs, on a stage-by-stage basis of the game program having the plurality of stages executed separately; a step of executing the game program on the above stage-by-stage basis, based on the operation inputs from the player; and a step of performing simple display of the past execution results of each game stage based on the acquired ghost data, according to the result of the game program execution in the each stage.

Also, preferably, the storage medium according to the present invention stores the match game program for enabling the game apparatus to execute the above each step. Further, in the match game processing system in which a game apparatus executes a game program using a virtual space, having a plurality of players participating therein, according to operation inputs from a player, and outputs a match game result from the result of game program execution, preferably, the above game apparatus includes: a communication unit externally acquiring ghost data representing past execution results of a plurality of stages of the game program; a display unit instructing each player to perform the operation inputs, on a stage-by-stage basis of the game program having the plurality of stages executed separately, and outputting the execution results; and a control unit executing the game program on the above stage-by-stage basis, based on the operation inputs from the player. The above control unit simply displays the past execution results of each game stage based on the acquired ghost data, according to the result of the game program execution in the above each stage.

According to the present invention, in a ghost match, a game proceeds with a simple playback of ghost data according to each play state of a player. Therefore, it becomes possible to perform the ghost match according to the play state of the player, enabling the reduction of a game time with an enhanced match effect.

In the match game processing method according to the present invention, preferably, the step of performing the simple display further includes a step of displaying at least a state at the time of starting each stage, and a state of the execution result at the time of completing each stage. Also, preferably, the storage medium according to the present invention stores the match game program for enabling the game apparatus to execute the above each step. Further, preferably, in the match game processing system according to the present invention, preferably, the control unit displays at least a state at the time of starting each stage, and a state of the execution result of the stage, so as to perform the simple display.

By this, it becomes possible to make simple display of other players more effective, enabling a more enhanced match effect.

In the match game processing method and system according to the present invention, preferably, the game signifies a game of moving a moving obj ect on a predetermined course by hitting the moving object from a start position to an end position of the course. The stage signifies a stage of moving the moving object by hitting the moving object. Also, preferably, the storage medium according to the present invention stores the match game program for enabling the game apparatus to execute the above each step.

In the match game processing method and system according to the present invention, preferably, the step of performing the simple display further includes a step of displaying a moving state of the moving object two-dimensionally on the course perspective. Also, preferably, the storage medium according to the present invention stores the match game program for enabling the game apparatus to execute the above each step.

The match game processing method and system according to the present invention, preferably, further includes the step of registering a history of the execution result of the player obtained in the game apparatus, as the ghost data. Also, preferably, the storage medium according to the present invention stores for enabling the game apparatus to execute the above each step.

Further scopes and features of the present invention will become more apparent by the following description of the embodiments with the accompanied drawings.

### BRIEF DESCRIPTION OF THE DRAWINGS

FIG. 1 shows a configuration diagram of a match game system according to one embodiment of the present invention.
FIG. 2 shows a block diagram of each satellite terminal shown in FIG. 1.
FIG. 3 shows an explanation diagram of tables provided in a server box shown in FIG. 1.
FIG. 4 shows a match game processing flowchart in each satellite according to one embodiment of the present invention.
FIG. 5 shows a play processing flowchart of each stroke shown in FIG. 4.
FIG. 6 shows a game processing flowchart in the server shown in FIG. 1.
FIG. 7 shows an explanation diagram of the operations in the match game processing shown in FIG. 4.
FIG. 8 shows an explanation diagram of the operations at the time of a cup-in, in the match game processing shown in FIG. 4.
FIG. 9 shows an explanation diagram of a shot start screen for each shot performed in a virtual space shown in FIGS. 4 and 5.
FIG. 10 shows an explanation diagram of a flying-ball screen in a virtual space shown in FIGS. 4 and 5.
FIG. 11 shows an explanation diagram of a landing and stop screen in a virtual space shown in FIGS. 4 and 5.
FIG. 12 shows an explanation diagram of a standby screen for other players in a virtual space shown in FIGS. 4 and 5.
FIG. 13 shows an explanation diagram of a simple playback screen of another player in a virtual space shown in FIGS. 4 and 5.
FIG. 14 shows an explanation diagram of a simple playback screen of still another player in a virtual space shown in FIGS. 4 and 5.
FIG. 15 shows an explanation diagram of a player movement screen in a virtual space shown in FIGS. 4 and 5.
FIG. 16 shows the configuration diagram of a match game system in another embodiment of the present invention.
FIG. 17 shows a processing flowchart of a ghost match game in the satellite shown in FIG. 16.
FIG. 18 shows a flowchart of play processing shown in FIG. 17.
FIG. 19 shows a processing flowchart of a ghost match game in the server shown in FIG. 16.
FIG. 20 shows a database processing flowchart in the database system shown in FIG. 16.
FIG. 21 shows an explanation diagram of a screen of a nice play or a misplay shown in FIG. 17.

### DETAILED DESCRIPTION OF THE INVENTION

The preferred embodiment of the present invention is described hereinafter referring to the charts and drawings. In the description below, a first embodiment of a match game system, processing of a participation match game, a second embodiment of the match game system, simulated match game processing and other embodiments are shown.

### First embodiment of match game system

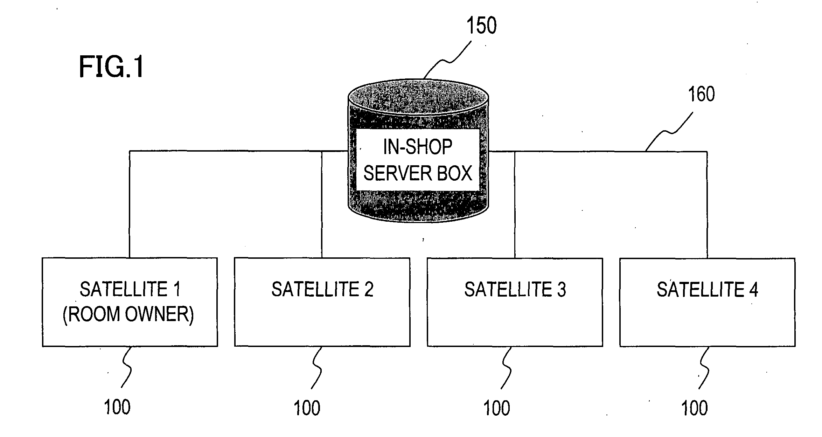

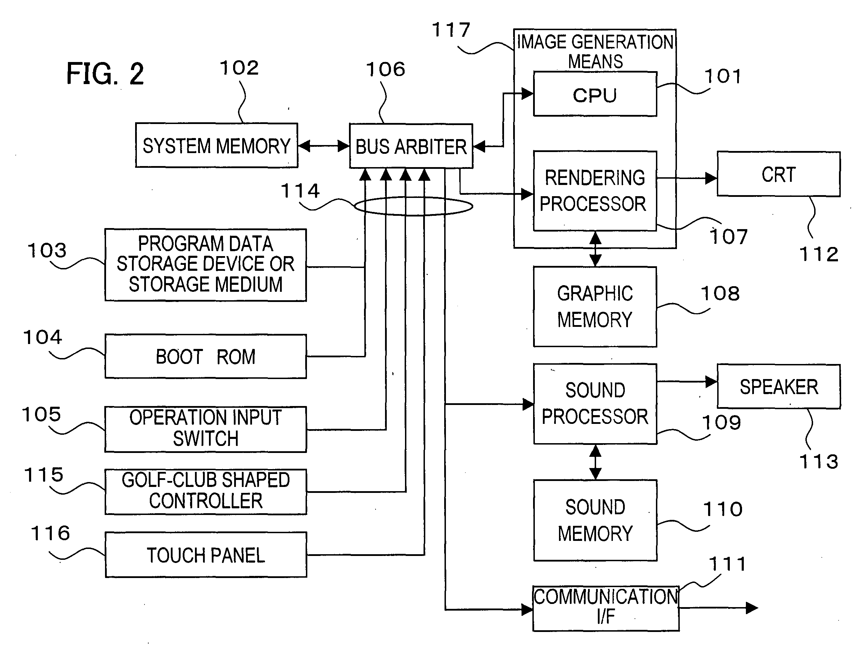

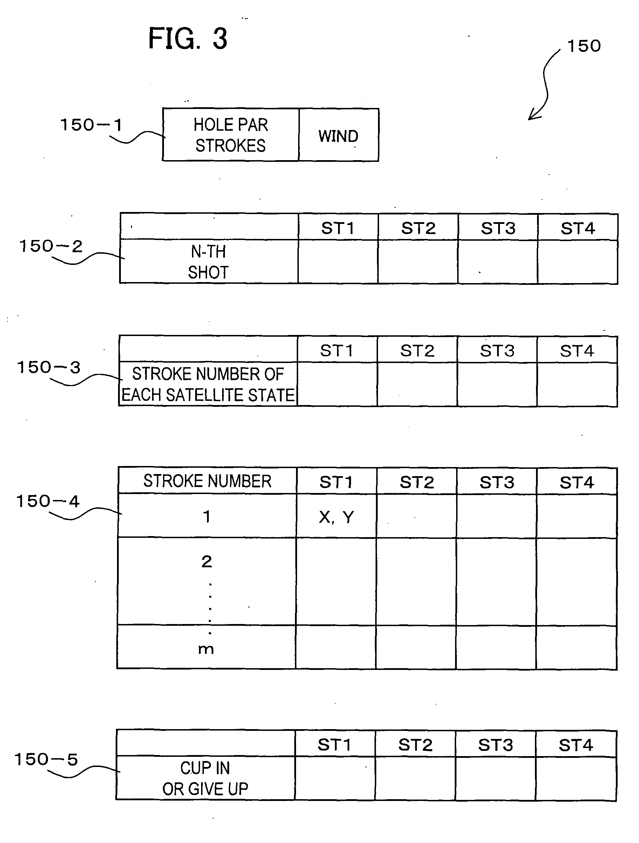

FIG. 1 shows a configuration diagram of a match game system according to one embodiment of the present invention; FIG. 2 shows a block diagram of a satellite terminal shown in FIG. 1; and FIG. 3 shows an explanation diagram of a table in a server box shown in FIG. 1. Here, as a match game in which synchronization is performed on a play-by-play basis of a plurality of plays, a golf game is exemplified in the following explanation, which may also be applicable to other match games of the same kind.

As shown in FIG. 1, in amusement facilities (shop), a plurality of satellite terminals (hereinafter simply referred to as satellites) 100 are connected to an in-shop server 150 via a network such as a LAN (local area network) 160. Each satellite 100 is a golf game apparatus.

As shown in FIG. 2, each satellite 100 includes a CPU (central processing unit) 101, which controls an overall system; a boot ROM (read only memory) 104, which stores a program for initiating satellite 100; and a system memory 102, which stores an image generation program and other programs and data.

To this satellite 100, a computer which executes general information processing programs, a personal computer capable of executing programs such as golf games, or a game information processing unit such as a game apparatus and a communication apparatus including a portable telephone can be applied.

The image generation program and data executed in CPU 101 includes a program and data for controlling a game, as well as a program and data for generating and controlling images for display.

To generate display images, polygon data (vertex data) having three-dimensional local coordinate data constituting a display object and NURBS data (non-uniform rational B-spline data: data of curved surfaces and control points) are stored in advance. Then, by means of CPU 101 and a geometry processor (not shown), the local coordinates are converted into the world coordinate system by allocating the above data in the world coordinate system of the three-dimensional virtual space.

Further, viewpoint coordinates generated through the operation by a player and the progress of the game are set into the world coordinate system. Next, the object located in the range of the view field viewed from a predetermined viewpoint with a predetermined view direction and view angle is converted into the viewpoint coordinate system having the viewpoint coordinates as the origin. Then, these converted object coordinates are transmitted to a rendering processor 107.

Rendering processor 107 first performs, for the received object coordinates, interpolation processing such as light source processing, and pastes a texture data stored in a graphic memory 108 onto the object to perform detail processing onto the object surface.

Further, in order to display the object onto a display means 112 from the three-dimensional solid object, the rendering processor 107 projects the object (polygon) onto a two-dimensional plane (screen), to convert to the two-dimensional coordinate data (screen coordinate system). The rendering processor 107 generates a two-dimensional image to display preferentially from the polygon having a shallow depth on the z-coordinate, i.e. from the polygon near the viewpoint coordinates, and outputs the above generated image onto a display means 112 such as a CRT and a liquid crystal display unit.

Namely, CPU 101 and rendering processor 107 function as image generation means 117 under the control of the image generation program.

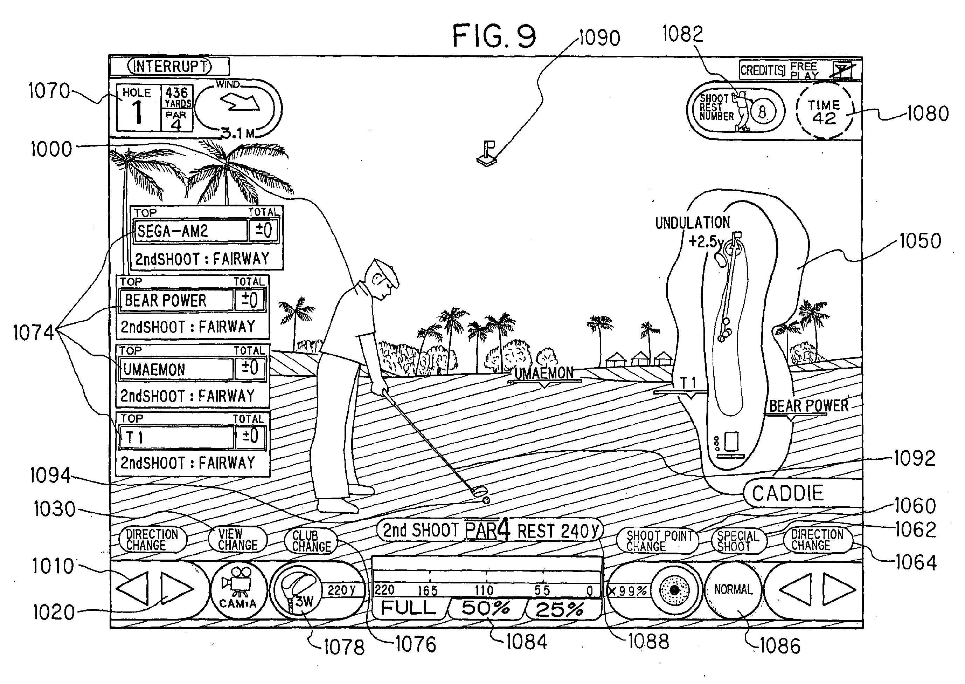

Satellite 100 is provided with an input means including an operation input switch 105, a controller 115 of golf club shape, a touch panel 116, etc. An operation of a golf club 1092 displayed on the screen (which will be described in FIG. 9 and after) is performed using the controller 115 of golf club shape.

The touch panel 116 is disposed along a display plane of a displaymeans 112 . The touch panel 116 produces variable contact information of an indication medium such as a finger to the touch panel 116, according to the contact status of the indication means to the touch panel 116, such as varying contact pressure, and/or moving a contact position properly, by the indication medium. Thus, a variety of inputs can be made using the touch panel 116.

Namely, the touch panel 116 functions as contact detection means. Here, the contact detection means is not limited to the touch panel detecting a contact of the indication medium.

More specifically, a plurality of sensors, such as infrared sensors, may be disposed along the rim of the display means so as to cover the display plane of the display means with light (infrared) or ultrasonic waves. By identifying a particular sensor corresponding to the light (infrared) or the ultrasonic wave being intercepted by an indication medium, the coordinates (position) of the display plane may be detected, irrespective of whether or not the indication medium contacts on the display means.

Also, the detection means may also include means described below: from a scanning line on the display plane being detected from an indication medium such as a light beam gun, the indication coordinates on the display plane are detected; or with the provision of sensors disposed on each corner of the display plane, so as to detect the light (infrared) or ultrasonic wave irradiated from an indication medium, the indication coordinates (position) on the display plane are detected from a detected magnitude of the light or the ultrasonic wave, or from detected timing (time difference). In this embodiment, these are called as an indicating position detecting means.

Further, the satellite 100 includes a sound processor 109 for generating voice, and a soundmemory 110 for storing the generated voice data. The sound processor 109 generates voice digital signals based on the data stored in the sound memory 110, and outputs the voice through a speaker 113 and/or a headphone (not shown).

Similarly, the satellite 100 provides with a program data storage device and a storage medium 103. A game program and data stored in such a storage medium 103 are read into the system memory 102, the graphic memory 108, and the sound memory 110. The data stored in the storage medium 103 includes information related to the game.

Moreover, such a storage medium includes an optically readable medium, such as CD-ROM and DVD-ROM, as well as an electrically readable medium including a mask ROM and a flash memory.

The satellite 100 further includes a communication interface 111, through which a network like LAN 160 is connected. The above-mentioned configuration elements of the satellite 100 are connected to a bus 114, and input/output of the program and the data between each configuration element is controlled by a bus arbiter 106.

Next, box tables provided in the server 150 shown in FIG. 1 will be explained referring to FIG. 3. The box tables include: a game status set table 150-1 storing par-stroke information of each hole in a golf game and wind information (wind direction and wind speed) ; a shot status table 150-2 storing a flag indicative of completion or non-completion of an n-th shot of each satellite 100; a number-of-shot table 150-3 storing the number of strokes (shots) of each satellite 100; a shot position table 150-4 storing the coordinates of a hit position of each shot of each satellite 100 (from 1st shot to m-th shot) and the coordinates of a ball stop position of each shot, each being represented by two-dimensional data; and a hole completion table 150-5 storing status of the ball cup in a hole (holed-out), or the player having given up, in regard to each satellite 100.

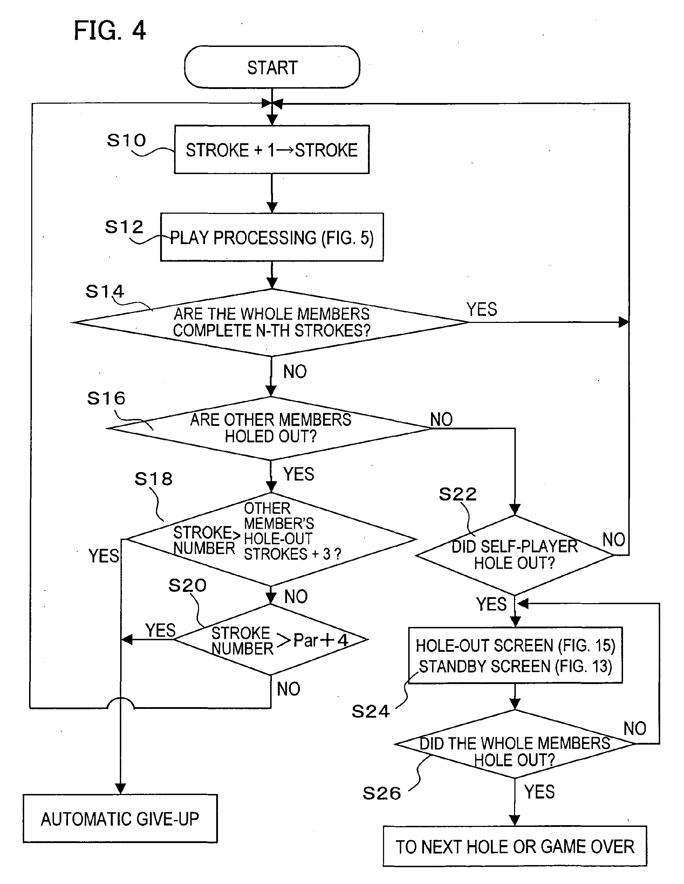

These tables 150-1 through 150-5 are generated when the server 150 receives play information from each satellite 100, through periodic communication performed between the server 150 and each satellite 100, as described later in FIG. 4 and thereafter. Also, the content of each table 150-1 to 150-5 is distributed from the server 150 to each satellite 100.

### Participation match game processing

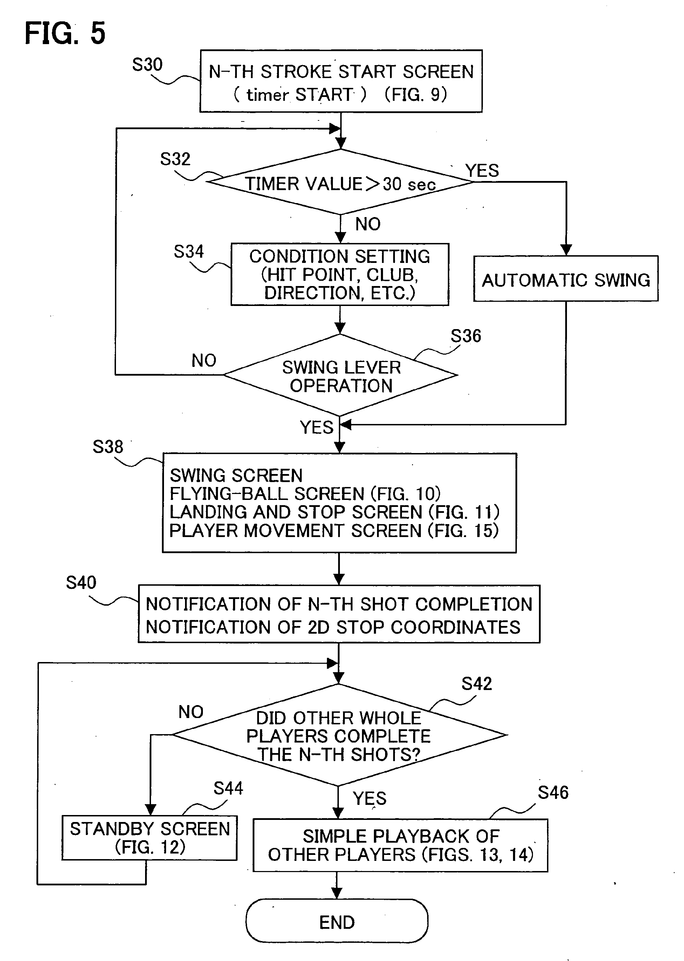

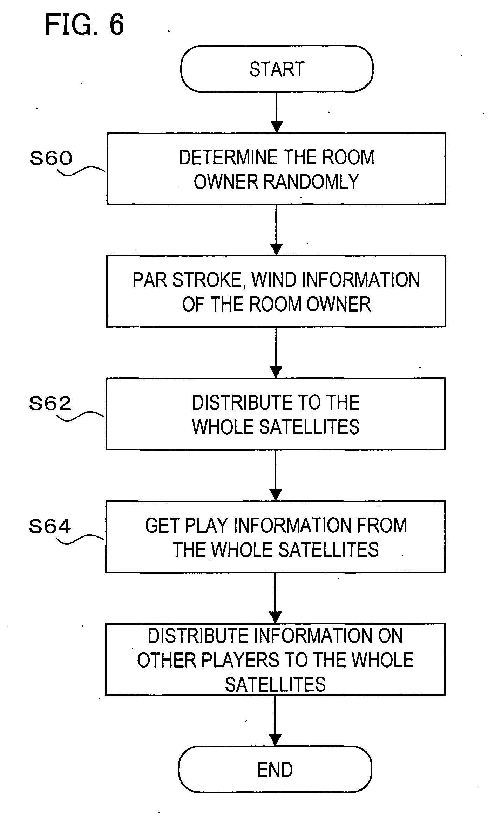

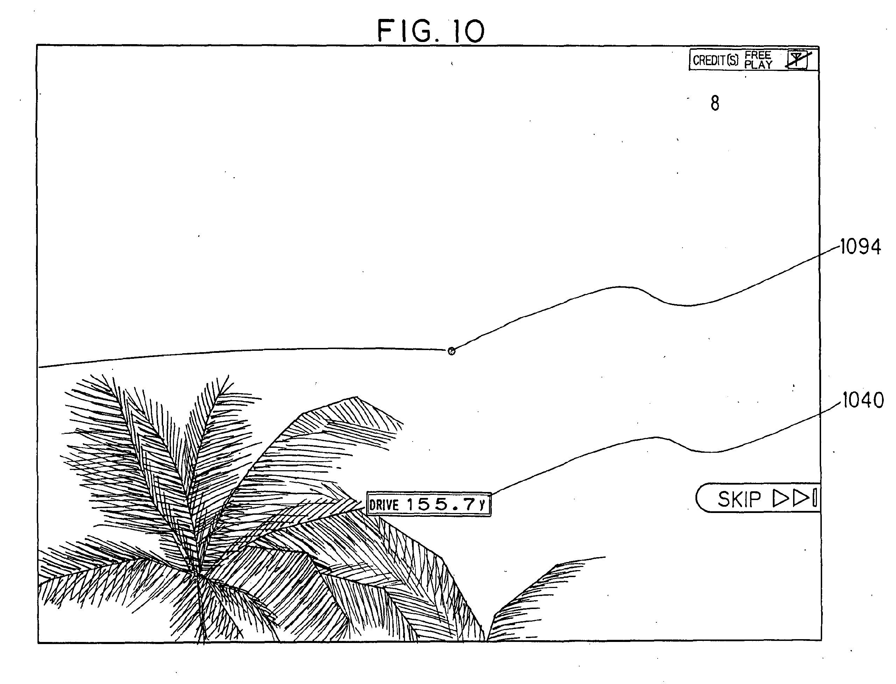

Participation match game processing will be described referring to FIGS. 4 through 15. FIG. 4 shows a match game processing flowchart in the satellite according to one embodiment of the present invention; FIG. 5 shows a play processing flowchart of each stroke shown in FIG. 4; FIG. 6 shows a game processing flowchart in the server shown in FIG. 1; and FIGS. 7 and 8 show explanation diagrams of the operations in the match game processing shown above. Also, FIGS. 10 through 15 are explanation diagrams of virtual space screens shown in FIGS. 4 and 5.

Hereafter, according to FIG. 4, the participation match game processing will be described referring to FIGS. 5 through 15. In these figures, although the golf match game is exemplarily shown, it is also applicable to other games of match type, in which one game is played through the successive execution of a plurality of plays.

(S10) After a player of the satellite 100 starts the game, the number of strokes (shots) of the player concerned is incremented by one. Here, at the start of the game, the number of strokes is initialized to zero.

(S12) The play processing is executed, which is shown in FIG. 5 described later.

(S14) The satellite determines whether the whole players (the whole participants) have finished a n-th stroke from the distribution data (the shot status table 150-2 shown in FIG. 3) from the server 150 described later. When the whole plays have finished (all players have finished a n-th stroke), the number of strokes is cleared to zero, and the process is returned to step S10. Namely, differently from the actual golf rules, in which a stroke is to be made from a player at the furthest location from the cup, the game here proceeds in such a way as to uniform the number of strokes among the whole players.

(S16) If the whole players do not complete the n-th stroke, the player concerned or any other player may possibly have completed the hole at his n-th stroke by hitting the ball into the cup. Therefore, using the distribution data (the hole completion table 150-5 shown in FIG. 3) distributed from the server 150, whether another player have completed the hole by finally hitting the ball into the cup (which is simply referred to as 'hole out' hereafter) .

(S18) When the other player has holed out (cup in), the satellite 100 judges whether the number of strokes of the player concerned exceeds a value which is a predetermined number (here, 3) being added to the number of strokes of the other player consumed to hole out (which is stored in number-of-shot table 150-5 shown in FIG. 3). When the number of strokes of the player concerned exceeds the value (the number of strokes consumed to hole out + 3), the player concerned is forced to give up the hole automatically, so as to reduce a waiting time of the other player having holed out.

(S20) When the number of strokes of the player concerned does not exceed the value equal to the number of 'hole out' strokes of the other player (in the number-of-shot table 150-5 shown in FIG. 3) being added to '3', the satellite 100 determines whether the number of strokes exceeds the value (the par strokes of theholeconcerned+ 4). On deciding that the number exceeds, the process forces the player concerned to give up the hole automatically, so as to reduce delayed plays of the whole players. On the other hand, on deciding that the number does not exceed the value (the par strokes of the hole concerned + 4), the process returns to step S10 so as to allow further shots.

(S22) In step S16, when any other players have not holed out, the satellite 100 determines whether or not the player concerned has holed out. If the player concerned has not holed out, the processes return to step S10 so as to allow further shots of the hole.

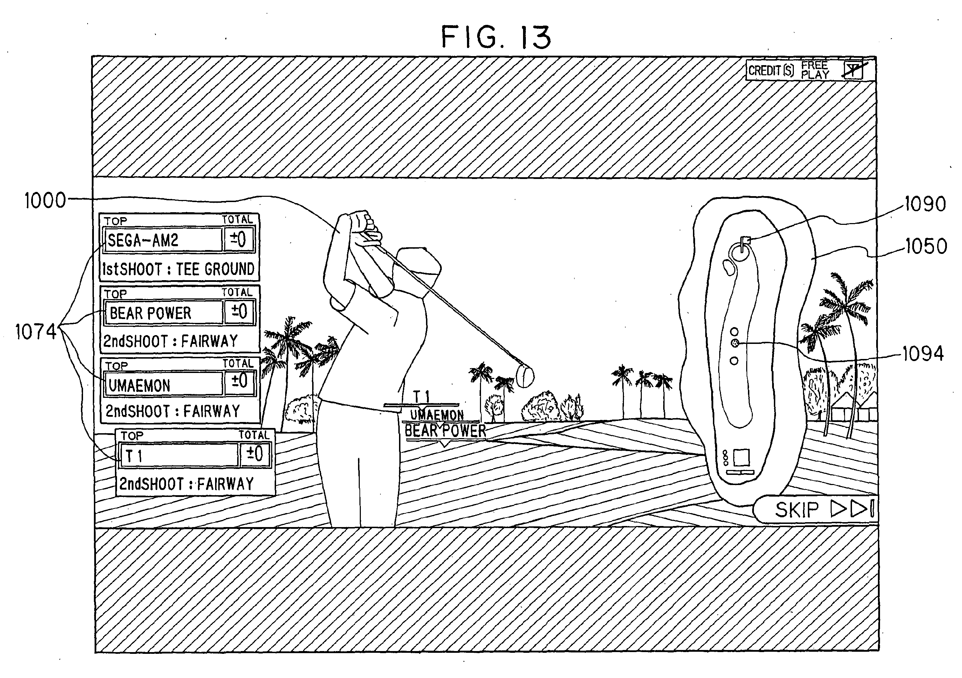

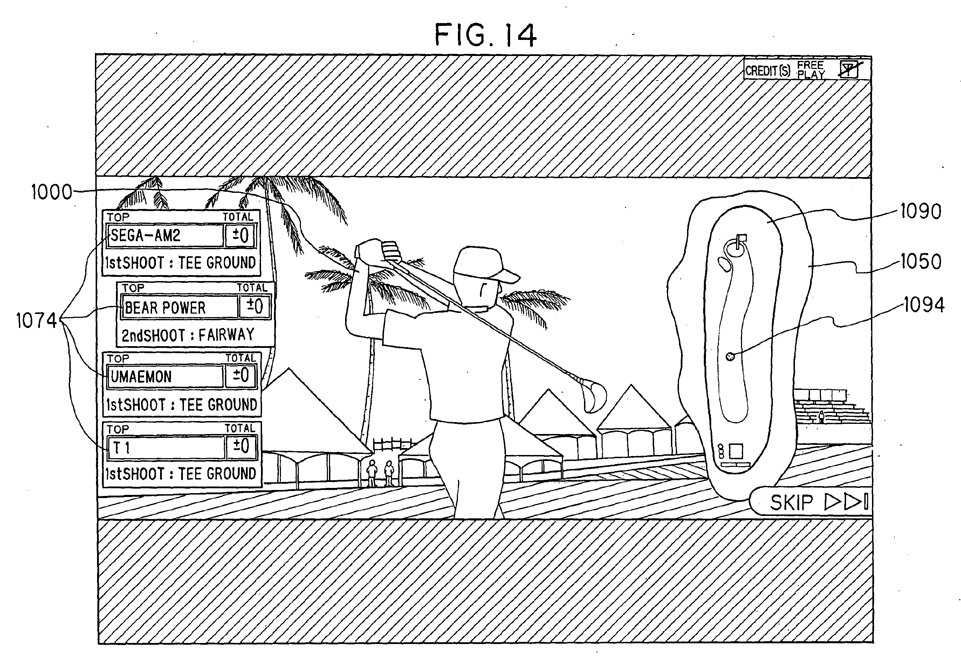

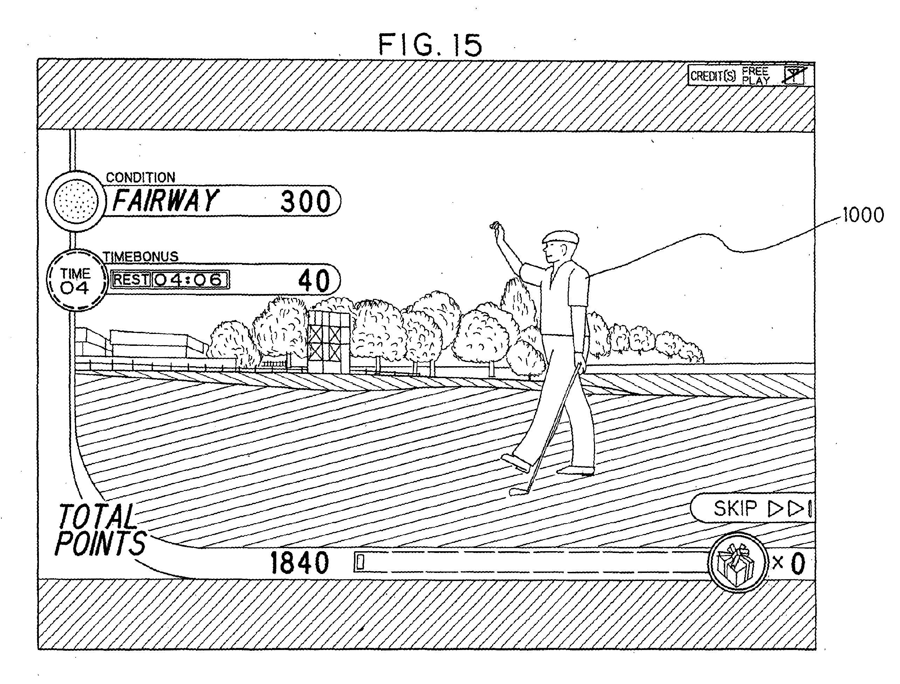

(S24) On the other hand, if the player concerned has holed out, the satellite 100 displays a hole-out screen illustrated in FIG. 15, and next displays a standby screen for waiting for other players, as will be illustrated in FIG. 13. As illustrated in FIG. 13, when the player has holed out prior to the other players, a measure is taken to make the player concerned not to feel the waiting time long, by making it possible for the player to perform a simplified 'chatting' with other players, by use of the standby screen. At this time, it may also be possible to display plays of other players having not completed the hole, onto the display on the satellite of the player having holed out, by means of a simplified playback, as shown in FIGS. 13 and 14.

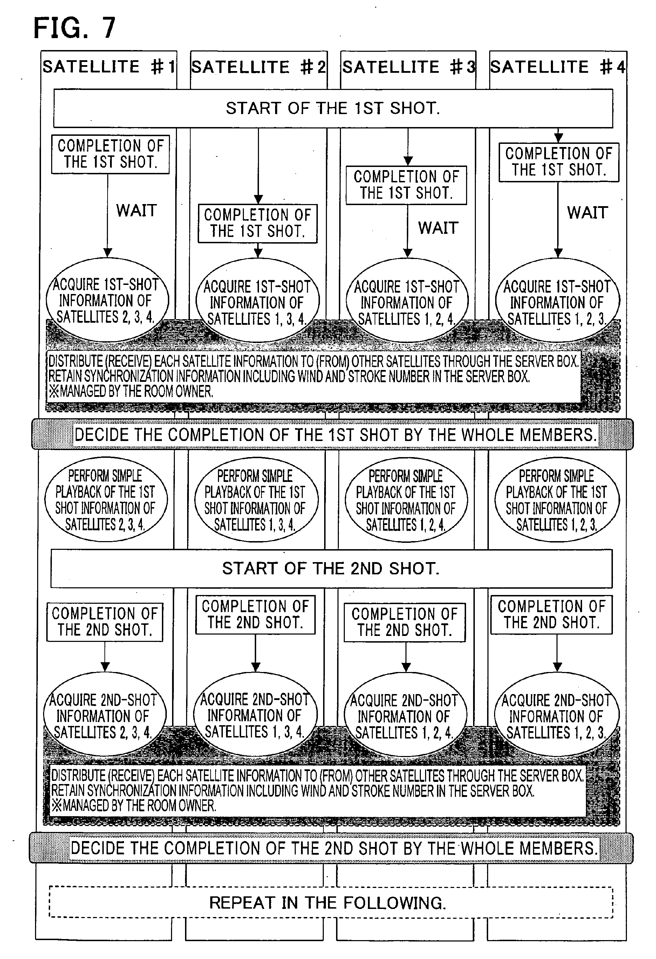

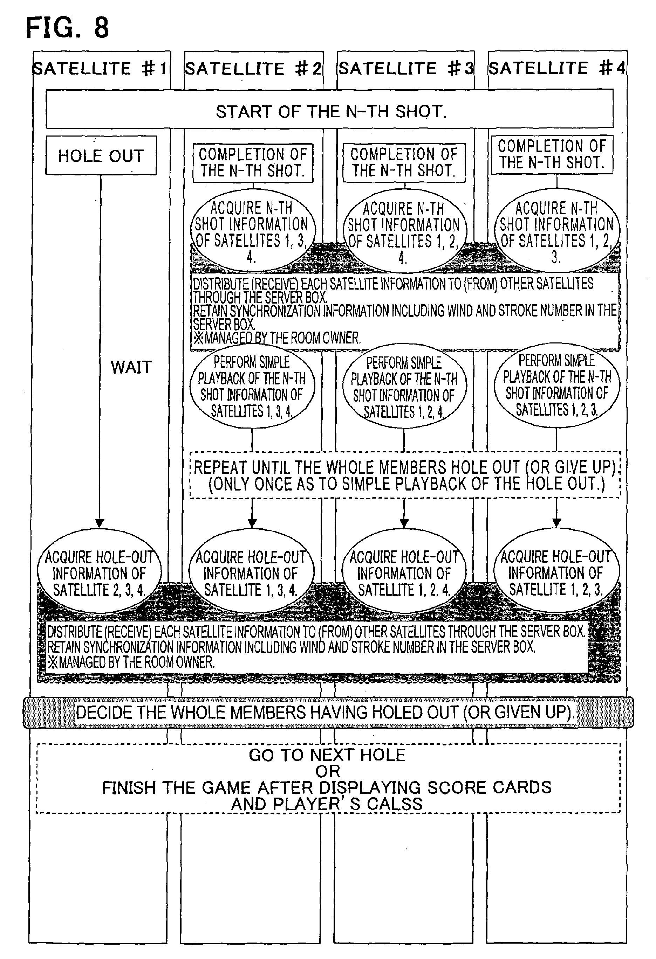

(S26) Using the distribution data (the hole completion table 150-5 shown in FIG. 3) from the server 150, as will be described later, the satellite 100 determines whether the whole players have holed out or given up. If the whole players have neither holed out nor given up, the standby screen illustrated in FIG. 13 is continued to display. Meanwhile, when the whole players have holed out or given up, the process proceeds to the next hole or the game is terminated, as shown in FIGS. 7 and 8. In case of the termination of the game, a score card and ranking are calculated, and displayed onto the screen.

Now, prior to the description of the play processing shown in FIG. 4 using FIG. 5, a shot start screen for an n-th stroke will be explained referring to FIG. 9. As shown in this FIG. 9, in a shot image related to the golf game displayed on display unit 112, for example, objects such as golf course scene (including a cup location, i. e. a target position which a ball 1094 is finally made to reach), player character 1000, club 1092, ball 1094, cup location indication object 1090 are displayed.

In addition to the above, a perspective display 1050 of a golf course and a hit point switch icon 1060 are displayed, as well as a viewpoint left shift button 1010, viewpoint right shift button 1020, viewpoint switch button 1030, etc.

Further, in the above image, a hole specification 1070 of each hole (hole number '1', yardage '438' and par '4', including hole conditions of a wind speed and a wind direction), name of each player, total score of each player, number of strokes of each player, ball position 1094, club indication 1078, play time indication 1080, number-of-shots-left indication 1082, energy indication 1084 set to each player are displayed. Each indication or the like is displayed in the plane more forehand than the golf course scene and player character 1000, etc. , in other words, in the foreground position of the screen, without being overlapped with each other.

Hit point switch icon 1060 sets a position of ball 1094 to be hit by club 1092, specifying the ball position to what extent the hit point thereof deviates, to the lower, right, left or upper side, from the center of ball 1094.

When a viewpoint is set in such a way that the cup is displayed right in front of ball 1094, cup location indication object 1090 is displayed on a straight line of the two-dimensional display plane connecting ball 1094 and the cup. Even in a situation such that the cup is not seen, the direction of the cup is indicated.

For example, as shown in FIG. 9, in a situation of player character 1000 being to hit the ball 1094 toward the cup, when the cup is out of sight because of the undulations, cup location indication object 1090 is disposed in a position above the cup with a predetermined height, and sufficiently adjacent to the viewpoint. With this, the cup location indication object 1090 is visible even when there is an obstacle such as a tree, which is taller than the height of the viewpoint, on the ground.

Further, the cup location indication object 1090 is also displayed on the two-dimensional plane of course perspective display 1050. The course perspective display 1050 displays a full perspective of a course, tee position, cup position, and present ball position in two dimensions. Further, the line from the hit position of the ball to the stop position thereof is displayed, for example, with a red line, so as to attract attention.

The hole specification 1070 indicates hole number, yardage, par strokes, wind speed and wind direction, respectively. In the shot indication 1086, for example, 'Normal,' or the like is indicated. In the energy indication 1084, the energy held by the player character 1000 is di splayed with a bar graph. This indicated energy decreases with a player's misplay and the number of ball strokes, and when the energy becomes zero, the game is terminated.

The club switch icon 1076 is provided for switch the club for use to a driver (#3 wood), iron, putter, etc. A special shot icon 1062 is provided for enabling selection of a special shot for a limited number of times. A direction change icon 1064 is provided for change the direction of the player toward the course, either in the left or right direction. The direction is changed using the left/right direction key disposed thereunder.

A current play indication 1088 indicates the number of strokes in the current screen, a par, and a yardage left. FIG. 9 shows a shot start screen before the swing of the second shot, representing a situation of player character 1000 adjusting the club 1092 to the ball 1094.

Now, referring to FIG. 5, the play processing shown in FIG. 4 is described, by use of FIGS. 7 through 14 also.

(S30) First, a play start screen for an n-th shot is displayed as shown in FIG. 9. Also, a timer specifying a time limit for one shot (stroke time limit) is started.

(S32) It is decided whether the timer value exceeds the stroke time limit (here, 30 seconds). When the timer value exceeds the stroke time limit of 30 seconds, a swing is automatically created and shown. Namely, under the set condition, the club 1092 is automatically swung, regardless of the player' s intention, and the process proceeds to step S38. This prevents a delayed play by each player, and unifies the playing time for one stroke on a player-by-player basis.

(S34) When the timer value is within the time limit, the player sets conditions on a shot screen shown in FIG. 9. Namely, while looking at the course condition on the screen of FIG. 9, the player sets hit point position, club to be used, hitting direction, shot type, etc., by use of the touch panel described earlier.

(S36) Next, the satellite 100 judges whether or not a swing lever 115 is operated. When the swing lever 115 is not operated, the process returns to step S32.

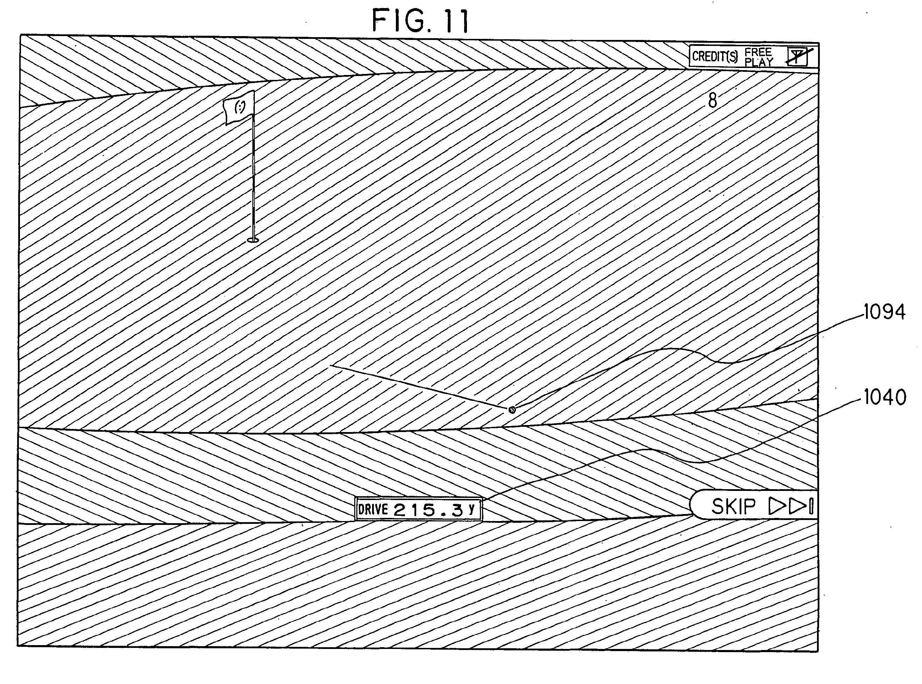

(S38) When the swing lever 115 is either operated or the automatic swing is performed, as shown in FIG. 9, a swing screen in which the player character 1000 swings up the club 1092, and then swings downward to hit the ball is displayed. Then, from the set conditions, a flying-ball screen shown in FIG. 10 is displayed. In this scene, a state of ball 1094 traveling against a background calculated in three dimensions is displayed, together with a flying distance 1040 produced by the shot. Next, a landing and stop screen shown in FIG. 11 is displayed. In this scene, a state of ball 1094 being landed and then stopped against a background is displayed, together with a distance 1040 to the stop point. Finally, as shown in FIG. 15, a screen in which the player character is walking after the shot toward the stopped ball is displayed.

(S40) The satellite 100 informs the server 150 of the completion of the n-th shot, the two-dimensional coordinates of the stop position of the n-th shot (the two-dimensional coordinates), and an existence or non-existence of a hole-out or a give-up.

(S42) From the distribution data (shot state table 150-2 shown in FIG. 3) from the server 150, the satellite 100 decides whether the whole of other players (participants) complete the n-th shots. If the whole players have completed the n-th shots, the play of the n-th shots is terminated.

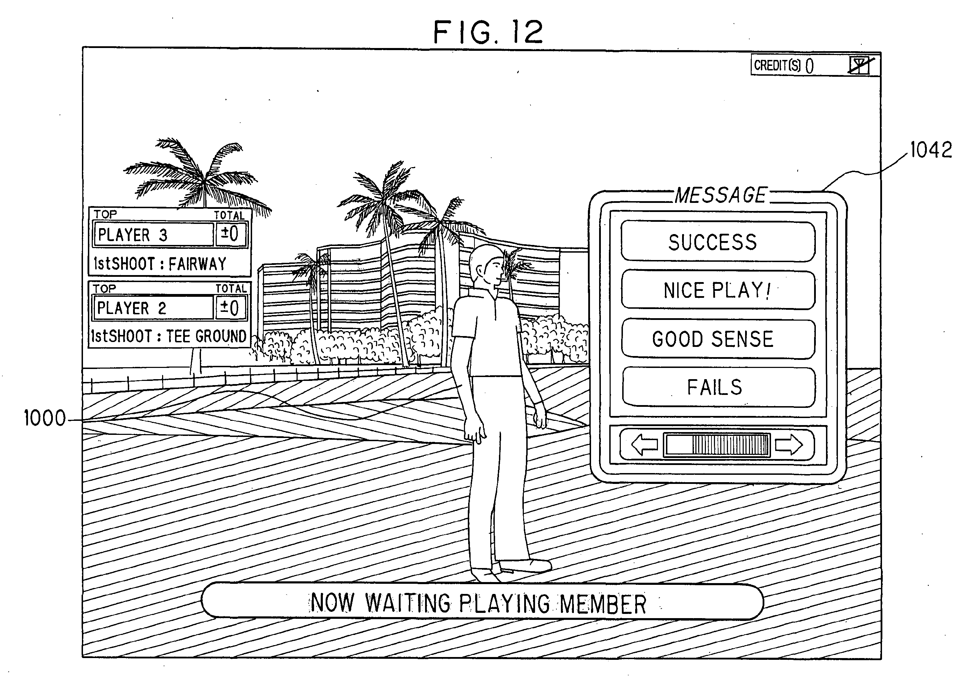

(S44) On the other hand, if the other player has not completed the n-th shot, as shown in FIG. 7, the player concerned falls into a standby state, waiting for the completion of the n-th shot of the other player. In this case, as shown in FIG. 12, a standby screen, in which player character 1000 is waiting at the ball stop position, is displayed. In this screen, chat icons 1042 for selecting from four kinds of chat messages are displayed. The player selects a chat message in chat icons 1042, and can chat with the other player(s) through the server 150. Thus, because of chatting, a player who has completed the shot earlier is relieved from feeling the waiting time too long.

(S46) Further, as shown in FIG. 7, when the completion of the n-th shots by the whole players is decided (settled) in step S42, the data of the other players (match opponents) are played back in a simple form (simple playback) onto the screen of the player concerned, as shown in FIGS. 13, 14, after the acquisition of the distribution data (the shot position table 150-4 shown in FIG. 3) from the server 150. Each simple playback screen shown in FIGS. 13 and 14 is displayed in a wide-screen format. Each screen includes player character 1000 at the shot completion, course perspective display 1050, name of each player, total score of each player, number of strokes and state 1074 of each player, which are displayed against background of the shot position of the other player. Further, in the above course perspective display 1050, in addition to the cup location 1090, a shot start position and a stop position of another player are displayed with circles, and a ball trajectory is displayed using a straight line between the above start and stop positions, and thus the process for the n-th shot is completed. Here, in step S42 , on deciding the completion of the n-th shots by the whole players and after the distribution data (shot position table 150-4 shown in FIG. 3) are acquired from the server 150, the simple playback of the data of other players (match opponents) is displayed on the self screen as shown in FIGS. 13 and 14. However, differently from the above, it may be possible to inform, at the time of the completion of the n-th shot, the completion of the n-th shot to the other terminals, together with a two-dimensional coordinates of the stop position of the n-th shot (two-dimensional coordinates in the full picture of the course), and an existence of hole-out or give-up. Then, the simple playback is performed at the time the data of the whole players are received, as shown in FIG. 14, and thereafter the play for the next (n+1) -th shot is started. With this method, it is also possible to synchronize among the game terminals on a shot-by-shot basis.

Referring to FIG. 7, when the first shot by the player of the satellite #1 has complete first, the display is shifted to the standby screen shown in FIG. 12, through which the player can chat with the other player (s) . During this period, when the players of the satellites #4 and #3 complete their first shots one after another, each screen is also shifted to the standby screen shown in FIG. 12, and each player can chat with the rest of players through this standby screen.

Finally, on completion of the first shot by the player of the satellite #2, each satellite acquires information related to the first shots performed in the other satellites, through the box tables in server 150. When the completion of the first shot by the whole players are finally decided, information of the first shots by the other satellites is simply played back on the screen of the self satellite, as shown in FIGS. 13, 14. In regard to the second shot, the above is also applicable. Here, the above information distribution may be performed through the notifications of the shot completion to the whole terminals from server 150, when the server has recognized the completion of the first shots played by the whole members (whole satellites) . Or, the information distribution may be performed through the inquiries, whether the first shots by the whole satellites are completed, being made from each terminal to the server at certain intervals. Any of the above methods may be applicable.

As such, differently from the actual golf rules that a shot is to be made from a player located further from the cup, the play herein proceeds in such a way as to uniform the number of strokes among the whole players, as shown in FIG. 7. As a result, it becomes possible to synchronize the plays on a shot-by-shot basis, and to enable a final completion of the game (either a single hole or eighteen holes) with a reduced waiting time of each player.

Further, since the received data of the match opponents are played back on the own screen of the player of interest, simultaneous plays of the match can be simulated, instead of a match only shown as being performed separately.

Further, when a player has completed a shot earlier as shown in FIG. 7, or when the player has holed out with a less number of strokes, a waiting time is produced for the player concerned. In order to reduce the above waiting time, or prevent the player from feeling the waiting time long, the following are devised.
(1) A simple chat is introduced in a standby screen, so as to reduce a feeling of being awaited.
(2) A time limit for one stroke is provided, so as to shift to an automatic swing when the time limit exceeds.
(3) The number stroke of the player of interest is restricted considering the number of hole-out strokes. When the number of strokes of the player concerned exceeds (a hole-out stroke number + a stroke number for restriction), the hole is automatically treated as a give-up, and thus, the waiting time of other player (s) who has holed out with a less number of strokes can be reduced.
(4) The number stroke of the player of interest is restricted considering the par strokes of the hole. When the number of strokes of the player concerned exceeds (the par strokes + a stroke number for restriction), the hole is automatically treated as a give-up, so as to prevent delayed plays by the whole players.

In the explanation of an operation at the time of hole-out shown in FIG. 8, when the player of the satellite #1 has holed out earlier, the player concerned can start chatting with the other player (s), as illustrated in FIG. 4, after the screen is shifted to the standby screen shown in FIG. 12. During this period, the players of the satellites #2, #3, #4 acquire information on the n-th shots of the other satellites #1 - #4 (here, hole-out information, because the satellite #1 has holed out) through the box tables in server 150. Then, the information of n-th shots and hole-out by the other satellites is simply played back on the screen of the player of interest, as shown in FIGS. 13, 14.

Thereafter, when the other satellite (s) either holes out or gives up, the players of each satellite #1, #2, #3 and #4 acquire the information of the number of strokes by the other satellites and the information of hole-out, through the box tables in the server 150. Then, the information related to the plays of the other satellites is simply played back on the screen of the player of interest, as shown in FIGS. 13 and 14. The above process is repeated until the whole members perform either hole-out or give-up.

When the whole members have holed out or given up, the player of each satellite #1, #2, #3 and #4 acquires the hole-out information of the other satellites through the box tables in the server 150. Thus, the hole-out (or give-up) of the whole members is confirmed and settled.

In the above description, the playback in a simple form (simple playback) represents playback of a state of the ball 1094 moving on the two-dimensional course perspective display 1050. Here, in reality, the server 150 has the coordinates of a hit position and the coordinates of a stop position, and accordingly a straightforward movement of the ball is drawn, differently from an actual ball trajectory. However, an accurate ball trajectory of the other player is not necessary. This simple playback can reduce a data amount for collection and distribution to/from the server 150. Also high-speed playback can be achieved with a more reduced waiting time.

Next, referring to FIG. 6, game data processing in server 150 shown in FIG. 1 is explained hereafter.

(S60) When the start of the game is notified from each satellite 100, a room owner of each satellite is determined at random. Par strokes of each hole, wind information including wind speed and wind direction being set in the satellite 100 of the determined room owner are acquired from the satellite 100 of the room owner, which are then set into the table 150-1.

(S62) The above par strokes of each hole, the wind information including the wind speed and the wind direction are distributed to the whole satellites 100. These information sets are set into course conditions in each satellite 100.

(S64) From each satellite 100, play information (data in step S40 shown in FIG. 5) is acquired, so as to generate tables 150-2, 150-3, 150-4 and 150-5. Then, the above table contents in each satellite 100 are distributed to the other satellites 100. This is repeated until the play is completed.

As such, since each satellite informs progress states of the plays in each satellite through the box in server 150, synchronization on a shot-by-shot basis can easily be attained.

### Second embodiment of match game system

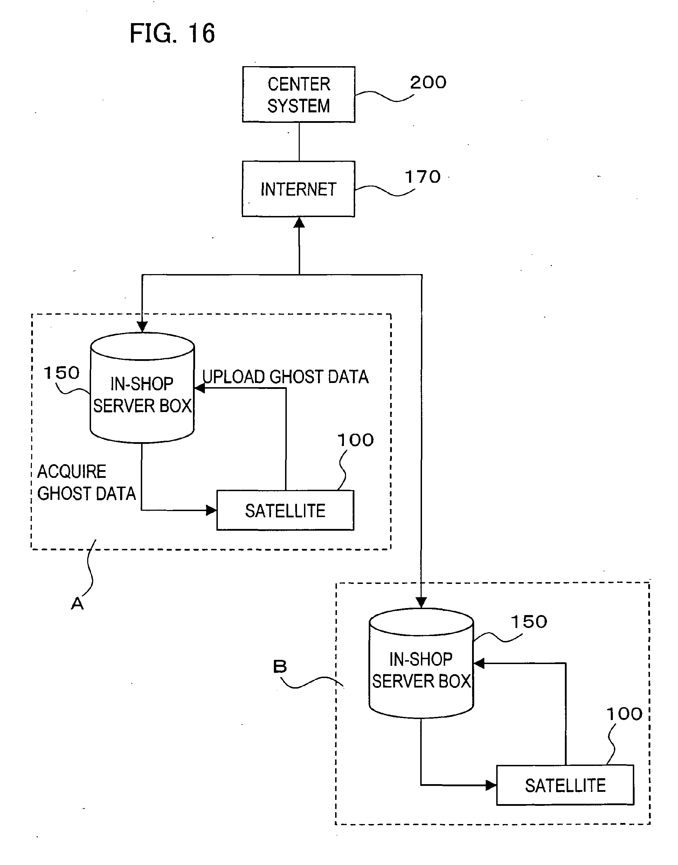

FIG. 16 shows a configuration diagram of a match game system according to a second embodiment of the present invention, which is an exemplary system to perform a 'ghost match' (simulated match).

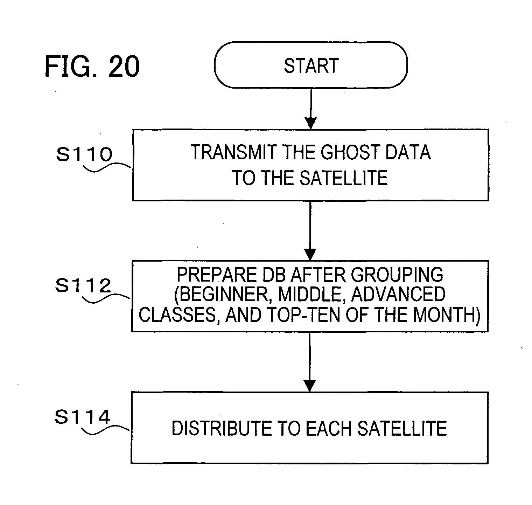

In FIG. 16, the like parts shown in FIGS. 1, 2 are referred to by the like numerals. As shown in FIG. 16, a center database system 200 stores ghost data into a database through database processing described later in FIG. 20. The center database system 200 is connected to an in-shop server 100 and Internet 170.

Similar to the configuration shown in FIG. 1, in amusement facilities (shops) A and B, a plurality of satellite terminals (hereinafter simply referred to as satellites) 100 are connected to an in-shop server 150 via a network such as a LAN (local area network) 160. Each satellite 100 is a golf game apparatus, which is configured as shown in FIG. 2.

In this example, one player performs a ghost match game. Accordingly, the satellite 100 acquires ghost data for 18 holes from the server 150, and starts the ghost match. Here, the ghost data includes character data (gender, equipped items, etc.) and coordinates of a ball for the whole shots in the 18 holes.

In this case also, the data of a match opponent is displayed as if a match is taking place through a simple playback on the screen of the player of interest, as shown in FIGS. 13 and 14. Because these ghost data have been acquired up to the end of 18th hole in the satellite 100, the game can proceed without any waiting time.

Further, the satellite 100 uploads the play data of the player of the satellite concerned for 18 holes to server 150, and registers the play data in the server 150. Further, the center database system 200 receives the ghost data newly registered in the server 150 in each shop from the server 150 through Internet 170, and registers the received ghost data. With this, the ghost data produced in one shop can be used in other shops.

### Simulated match game processing

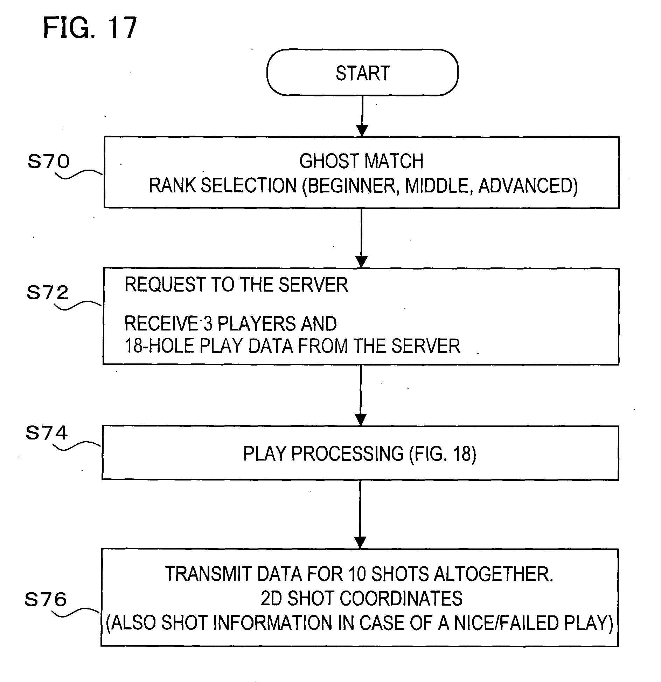

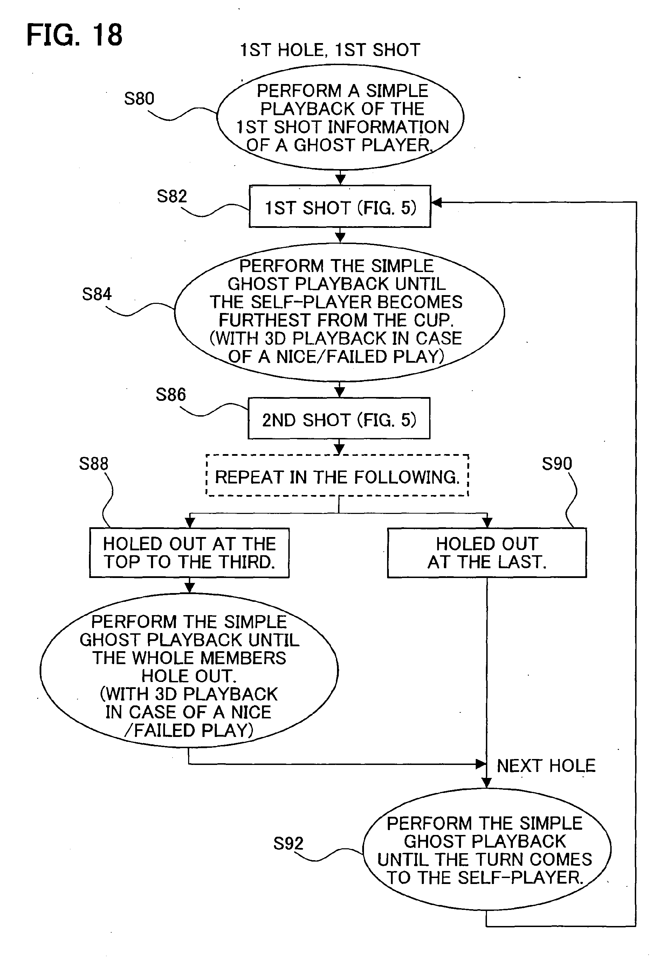

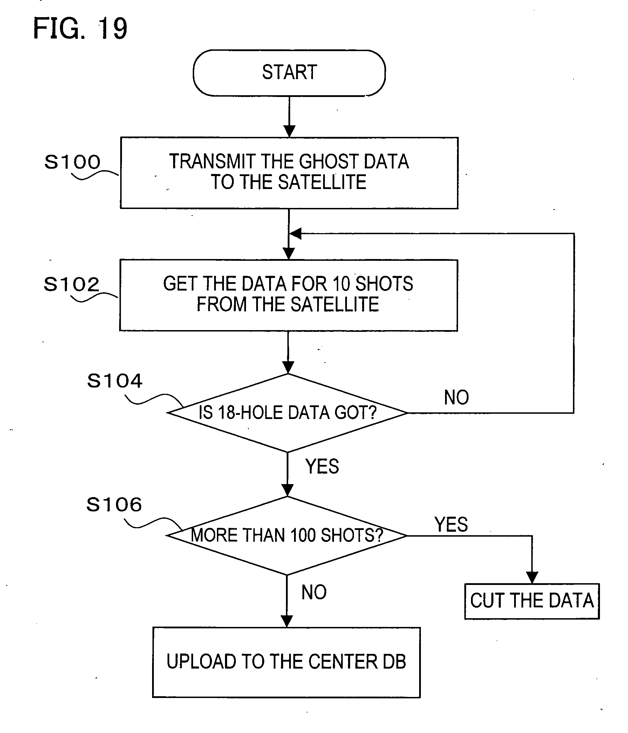

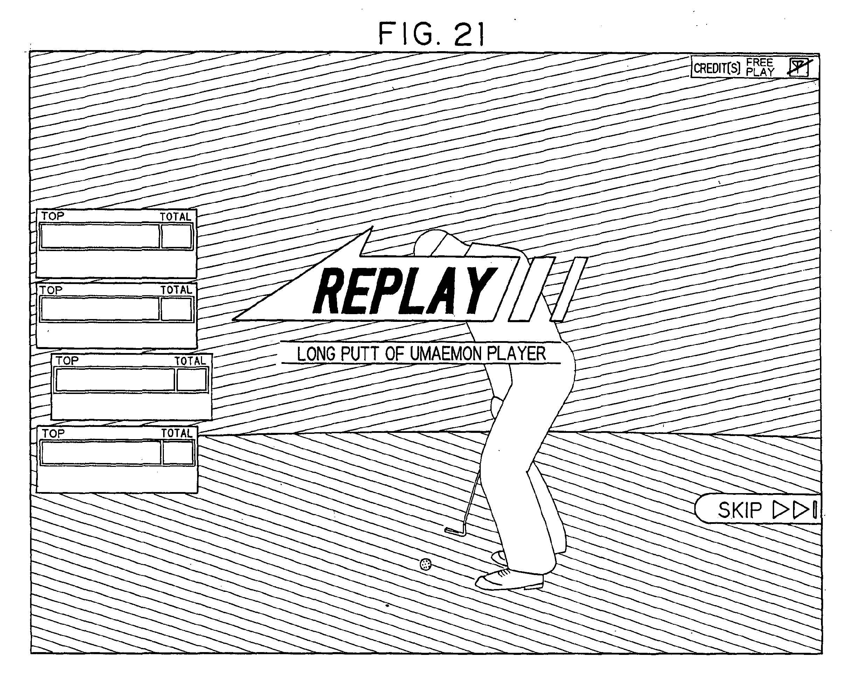

Referring to FIGS. 17 through 21, simulated match game processing is explained. FIG. 17 shows a match game processing flowchart performed in the satellite according to another embodiment of the present invention; FIG. 18 shows a play processing flowchart for each stroke in FIG. 17; FIG. 19 shows a game processing flowchart in the server shown in FIG. 16; FIG. 20 shows a database processing flowchart in the database system shown in FIG. 16; and FIG. 21 shows an explanation diagram of operation of the match game processing.

In the following, referring to FIG. 17, the simulated match game processing is described by use of FIGS. 18 through 21. Although a golf match game is exemplified in these figures, it is also applicable to other games of match type, in which one game is played by executing a plurality of plays one after another. (S70) By operating an operation input switch 105, the satellite 100 selects a ghost match, and also selects a rank (beginners' class, middle class or advanced class) of the opponent(s).

(S72) The satellite 100 transmits information of the match game and the rank to the server 150, and requests data. The satellite 100 then receives play data (ghost data) of three players for 18 holes from the server 150.

(S74) The satellite 100 performs play processing using the ghost data, as will be described later in FIG. 18.

(S76) The satellite 100 collects the play data of the self player for 10 shots, and transmits the above play data to the server 150. Similar to the aforementioned first embodiment, these play data include character data (gender, equipped items, etc.), two-dimensional coordinates of a ball hit position and two-dimensional coordinates of a ball stopposition. Further, when a nice play such as a successful chip-in and a long-pat, or a misplay including a shot going out of bounds (OB) and falling into a water hazard (WH) is determined as compared with a preset play result, necessary data for three-dimensional display, such as hit position, ball condition, hit point, club, power, timing, wind direction and wind power, are also transmitted. The above processing is repeated for 18 holes, and the process is terminated.

Next, referring to FIG. 18, the play process shown in FIG. 17 is described.

(S80) First, the satellite 100 performs a simple playback of information of a first shot of a ghost player onto the own screen, as shown in FIGS. 13 and 14. Namely, as shown in FIGS. 13 and 14, the simple playback screen is constituted of a wide-screen format. Against a background of a shot position of other players, a player character 1000, course perspective display 1050, name of each player, total score of each player, stroke number and state 1074 of each player are displayed at the time of the shot completion. In the above course perspective display 1050, in addition to a cup position 1090, a shot start position and a ball stop position of a ball 1094 of another player are indicated by circles. Also, a ball trajectory is displayed using a straight line connecting between the above start position and stop position. Further, a nice play or a misplay is displayed three-dimensionally, since necessary data have been recorded for three-dimensional display, in a similar way to those shown in FIGS. 9 through 11. With this, a feeling of reality in the ghost play can be enhanced, which makes the match more exciting.

(S82) Similar to FIG. 5, the first shot of the player of the satellite concerned is executed. In this case, because it is not necessary to wait for the plays of the other players, the standby screen processing and the simple playback processing illustrated in step S42 and after in FIG. 5 are unnecessary.

(S84) Next, similar to the ordinary golf rules, the play data for the second shot and thereafter are extracted from the ghost data until the player of interest becomes located furthest to the cup. Based on these ghost data, a simple playback on the own screen is performed. Namely, from the distance produced by the first shot of the player concerned, a distance left to the cup is calculated. And then the calculated distance is compared with distances left to the cup of each ghost obtained by the ghost data. Until the own ball is positioned furthest to the cup, the play data for the second shot and after are extracted from the respective ghost data, and the simple playback is performed.

(S86) When it is decided that the ball of the player concerned is furthest to the cup, in a similar way to FIG. 5, the second shot play of the player concerned is executed. In this case, because it is not necessary to wait for the plays of the other players, the standby screen processing and the simple playback processing illustrated in step S42 and after in FIG. 5 are unnecessary. The above processing is repeated for the successive shots.

(S88) Then, when the player concerned has holed out, the stroke number is compared with the ghost data. If it is decided that the player concerned holed out from at the top to the third, each stroke of the other players (ghosts) who has not yet holed out is played back in a simple form on the screen of the player concerned, as shown in FIGS. 13 and 14. When the whole members have holed out, the process proceeds to the next hole, as described in step S92.

(S90) On the other hand, by comparing with the ghost data, when it is decided the player concerned holed out lastly, the process proceeds to the next hole described in step S92, because the whole members have holed out.

(S92) When the next hole is started, the honor of the hole is decided, and in a similar way to step S80, information of the first shots of each ghost is played back in a simple form, until the turn comes to the player concerned. The process then returns to step S82.

In these steps S80, S84 and S88, as shown in FIG. 21, a nice play and a misplay by the ghost are displayed three-dimensionally, similar to FIGS. 9 through 11. Here, the ball trajectories are also played back in a complete form. However, the number thereof is limited to three data in maximum per ghost opponent among the data of 18 holes, because required data capacity is substantially large. For example, when the number of ghost opponents is three, maximum nine data can be played back.

Next, referring to FIG. 19, the ghost processing in the server 150 is described.

(S100) In response to a request from the satellite 100, 18-hole ghost data for three players, of which ranks meet the request from the player, are transmitted to the satellite 100.

(S102) The server 150 receives the data for 10 shots transmitted from the satellite 100 in the above-mentioned step S76.

(S104) The server 150 decides whether the 18-hole play data have been acquired. If the 18-hole play data have not been received yet, the process returns to step S102.

(S106) On the other hand, on deciding that the 18-hole play data have been received from the satellite 100, the server 150 further decides whether or not the number of the 18-hole play data having been received exceeds the number of restricted shots (here, 100 shots) . If the number is the restricted number or more, the data concerned are cut (deleted). Namely, the play data which produce a long ghost-match time are cut, because too much data lessen interest of the opponent player of the ghost play, and the play time becomes long.

(S108) Meanwhile, when the number of 18-hole play data received from the satellite 100 is less than the restricted number (here, 100 shots), the server 150 transmits the 18-hole play data to the center database system 200 via Internet 170, as new ghost data. For example, the above transmission is performed after the shop is closed, at midnight, etc., namely, at the time when the server 150 and the network is relatively idle, so as to reduce a traffic amount at busy hours.

Next, referring to FIG. 20, the database processing in the center database system 200 is described.

(S110) As shown in FIG. 19, the center database system 200 receives ghost data from in-shop server 150.

(S112) The center database system 200 separates the received ghost data into groups. For example, from the number of shots for the 18 holes, the ghost data decides either of the beginners' class, the middle class and the advanced class, and also decides whether the data are to be registered in the top ten of the month. The center database system 200 then stores into a database according to the decided classes.

(S114) The center database system 200 transmits the newly registered ghost data to each in-shop server 150 through Internet 170. In this case also, the transmission is performed after the shop is closed, at midnight, etc., namely, at the time when the server 150 and the network is relatively idle, so as to reduce a traffic amount at busy hours.

As such, in the ghost match, in a similar way to the ordinary golf rules, the player having the ball in the furthest position to the cup hits first. Until the player of interest becomes furthest to the cup, the information of the second shots and after of the ghost player(s) is played back in a simple form on the own screen of the player, as shown in FIGS. 13 and 14. Namely, it is decided to what extent of the play data among the ghost data the simple playback is to be performed according to the shot result of the player concerned, and thereafter, the playback of the ghost data is performed. Thus, the ghost match can be performed in conformity with the real golf rules. Further, by use of the simple playback, the player can match the game with an increased feeling of reality in the ghosts, with a reduced waiting time of the player.

Further, in the simple playback, since ball movements of the ghosts are displayed on a course perspective display, the feeling of reality of the ghost plays can be enhanced. In addition, a detailed display can improve the feeling of reality of the ghost play, which makes the match more exciting.

Also, the own play data of the player of interest is also registered in the database as ghost data, and a rank is assigned to the player. Thus, it becomes possible to have a match against the player himself in the past, which also makes the golf play more exciting.

Further, since a ghost data portion having too many shots to interest the player is deleted by the server 150, registration of wasteful ghost data, which may results in a waste of the database, can be prevented.

### Other embodiments

In the aforementioned embodiment of the present invention, a golf game for 18 holes has been described. However, the present invention may be applicable to a half-round (9-hole) golf play, and also to a single-hole play. Further, although a match game has been explained using the golf game, the present invention may also be applicable to other games in which a multiple of persons participate and the participants compete by performing a play such as a shot for a plurality of times. For example, the present invention is applicable to a game in which the game proceeds to the second stage when the first stage is cleared.

Similarly, although the description has been made on an in-shop system, the method of the present invention can be applied to a form such that each individual connects a game apparatus to a server through the Internet. In addition, it is also possible to connect between the game apparatuses via the Internet, etc., or directly through the connection using a communication cable or through the wireless connection, without intervention of the server.

To summarize the effects of the present invention, plays are synchronized on a stage-by-stage basis of the plays of each player. Therefore, the completion of the game can be achieved with a reduced waiting time of each player. Also, at the completion of each stage, the received data of the opponents can be played back onto the screen of each player, enabling the match to proceed as if the players were really playing a match. Further, in a ghost match, the game proceeds with a simple playback of ghost data according to the execution results of players. This enables a ghost match to proceed depending on the execution result of the players, which further enables a shortened game time, as well as an enhanced match effect. With this, it can be expected to increase interest in a relatively long-time game such as a golf game, and contribute to an increase of the revenue of amusement facilities.

The foregoing description of the embodiments is not intended to limit the invention to the particular details of the examples illustrated. Any suitable modification and equivalents may be resorted to the scope of the invention. All features and advantages of the invention which fall within the scope of the invention are covered by the appended claims.

## Claims

1. A match game processing method in which a game apparatus executes a game program sharing a common virtual space with other game apparatuses according to operation inputs from players, communicates the results of game program execution with the other game apparatuses, and outputs a match game result, said match game processing method comprising:
a step of instructing each player to perform the operation inputs on a stage-by-stage basis of the game program having a plurality of stages executed separately;
a step of executing the game program based on the operation inputs from the player, and communicating the game execution results with the other game apparatuses, on said stage-by-stage basis;
a step of advancing the game program by uniforming each game program stage among the plurality of game apparatuses, based on the game execution results obtained from the other game apparatuses through the communication; and
a step of performing simple display of the received game execution results of the other game apparatuses in the each stage.

2. The match game processing method according to claim 1, wherein the step of performing the simple display further comprises:
a step of displaying at least a state at the time of starting each stage, and a state produced by the play at the time of completing each stage.

3. The match game processing method according to claim 1, wherein the step of executing the game program further comprises:
a step of detecting whether the operation inputs of a certain stage are completed within a time limit of the operation inputs of the stage; and
a step of forcibly terminating the operation inputs of the stage, on detecting the operation inputs of the stage not being completed within the time limit of the operation inputs of the stage.

4. The match game processing method according to claim 1, wherein the step of executing the game program further comprises:
a step of displaying a standby screen for performing chat communication with the game apparatuses of the other players, on the game apparatus of which player has completed the operation inputs of the stage early.

5. The match game processing method according to claim 1, wherein the step of executing the game program comprises a step of executing a game program of moving a moving object on a predetermined course by hitting the moving object from a start position to an end position of the course,
and wherein the stage signifies a stage of moving the moving object by hitting the moving object.

6. The match game processing method according to claim 5, wherein the step of advancing the game program further comprises:
a step of forcibly terminating the game executed in the game apparatus of a player, of which scored number of strokes exceeds a stroke limit of the game which is determined based on the number of strokes scored by the operation of another player having moved to the end position of the course earlier.

7. The match game processing method according to claim 5 , wherein the step of advancing the game further comprises:
a step of forcibly terminating the game executed in the game apparatus of a player of which scored number of strokes exceeds a stroke limit being set to the course.

8. The match game processing method according to claim 5, wherein the step of performing the simple display further comprises:
a step of displaying a moving state of the moving object two-dimensionally on the course perspective.

9. A match game processing method in which a game apparatus executes a game program using a virtual space, having a plurality of players participating therein, according to operation inputs from the players, and outputs a match game result from the result of game program execution, said match game processing method comprising:
a step of acquiring ghost data representing past execution results of a plurality of stages of the game program in the game apparatus operated by the player;
a step of instructing said player to perform the operation inputs, on a stage-by-stage basis of the game program having the plurality of stages executed separately;
a step of executing the game program on said stage-by-stage basis, based on the operation inputs from the player; and
a step of performing simple display of the past execution results of each game stage based on the acquired ghost data, according to the result of the game program execution in the each stage.

10. The match game processing method according to claim 9, wherein the step for performing the simple display further comprises:
a step for displaying at least a state at the time of starting each stage, and a state produced by the play at the time of completing each stage.

11. The match game processing method according to claim 9, wherein the step of advancing the game program comprises a step of advancing a game program of moving a moving object on a predetermined course by hitting the moving object from a start position to an end position of the course,
and wherein the stage signifies a stage of moving the moving object by hitting the moving object.

12. The match game processing method according to claim 11, wherein the step of performing the simple display further comprises:
a step of displaying a moving state of the moving object two-dimensionally on the course perspective.

13. The match game processing method according to claim 9, further comprising:
a step of registering the execution result according to the operation inputs from the players, as the ghost data .

14. A storage medium stored match game processing program sharing a common virtual space with other game apparatuses, being executed in a game apparatus according to operation inputs from a player, communicating the results of game program execution with the other game apparatuses, and outputting a match game result,
wherein said match game processing program makes the game apparatuses to execute the steps comprising:
a step of instructing the player to perform the operation inputs, on a stage-by-stage basis of the game program having a plurality of stages executed separately;
a step of executing the game based on the operation inputs from the player, and communicating the game execution results with the other game apparatuses, on said stage-by-stage basis;
a step of executing the game program by uniforming each game program stage among the plurality of game apparatuses, based on the results of the game program execution obtained from the other game apparatuses through the communication; and
a step of performing simple display of the received game execution results of the other game apparatuses in the each stage.

15. The storage medium according to claim 14,
wherein the step of performing the simple display further comprises:
a step of displaying at least a state at the time of starting each stage, and a state of the execution result at the time of completing each stage.

16. The storage medium according to claim 14,
wherein the step of advancing the game further comprises:
a step of detecting whether the operation inputs of a certain stage are completed within a time limit of the operation inputs of the stage; and
a step of forcibly terminating the operation inputs of the stage, on detecting the operation inputs of the stage not being completed within the time limit of the operation inputs of the stage.

17. The storage medium according to claim 14,
wherein the step of advancing the game program further comprises:
a step of displaying a standby screen for performing chat communication with the game apparatuses of the other players, on the game apparatus of which player has completed the operation inputs of the stage early.

18. The storage medium according to claim 14,
wherein the game signifies a game of moving a moving object on a predetermined course by hitting the moving object from a startposition to an endposition of the course, and wherein the stage signifies a stage of moving the moving object by hitting the moving object.

19. The storage medium according to claim 18,
wherein the step of advancing the game program further comprises:
a step of forcibly terminating the game executed in the game apparatus of a player of which scored number of strokes exceeds a stroke limit of the game which is determined based on the number of strokes scored by the operation of another player havingmoved to the end position of the course earlier.

20. The storage medium according to claim 18,
wherein the step of advancing the game further comprises:
a step of forcibly terminating the game executed in the game apparatus of a player of which scored number of strokes exceeds a stroke limit being set to the course.

21. The storage medium according to claim 18,
wherein the step of performing the simple display further comprises:
a step of displaying a moving state of the moving object two-dimensionally on the course perspective.

22. A storage medium stored match game processing program being executed in a game apparatus using a virtual space, having a plurality of playersparticipating therein, according to operation inputs from the players, and outputting a match game result from the result of game program execution,
wherein said match game processing program makes the game apparatuses to execute the steps comprising:
a step of acquiring ghost data representing past execution results of a plurality of stages of the game program;
a step of instructing the player to perform the operation inputs, on a stage-by-stage basis of the game program having the plurality of stages executed separately;
a step of executing the game program on said stage-by-stage basis, based on the operation inputs from the player; and
a step of performing simple display of the past execution results of each game stage based on the acquired ghost data, according to the result of the game program execution in the each stage.

23. The storage medium according to claim 22,
wherein the step of performing the simple display further comprises:
a step of displaying at least a state at the time of starting each stage, and a state of the execution result at the time of completing each stage.

24. The storage medium according to claim 22,
wherein the game signifies a game of moving a moving object on a predetermined course by hitting the moving object from a start position to an endposition of the course, and wherein the stage signifies a stage of moving the moving object by hitting the moving object.

25. The storage medium according to claim 24,
wherein the step of performing the simple display further comprises:
a step of displaying a moving state of the moving object two-dimensionally on the course perspective.

26. The storage medium according to claim 22,
wherein said match game processing program executes a step for registering the execution result obtained by the player of the game apparatus, as the ghost data.

27. A match game processing system in which a game apparatus executes a game program sharing a common virtual space with other game apparatuses according to the operation inputs from players, communicates the results of game program execution with the other game apparatuses, and outputs a match game result,
wherein said game apparatus comprises:
a communication unit communicating the execution results among the game apparatuses operated by the players ;
a display unit instructing each player to perform the operation inputs, on a stage-by-stage basis of the game program having a plurality of stages executed separately, and outputting the execution results; and
a control unit executing the game program by uniforming each game program stage among the plurality of game apparatuses, based on the game execution results obtained from the other game apparatuses through the communication according to the execution results by the players,
wherein, in each stage, the control unit simply displays on the display unit the game execution results of the other game apparatuses obtained through the communication.

28. The match game processing system according to claim 27, wherein the control unit displays at least a state at the time of starting each stage, and a state of the execution result of the stage, so as to perform the simple display.

29. The match game processing system according to claim 27, wherein the control unit detects whether the operation inputs of a certain stage are completed within a time limit of the operation inputs of the stage, and on detecting the operation inputs of the stage not being completed within the time limit of the operation inputs of the stage, forcibly terminates the operation inputs of the stage.

30. The match game processing system according to claim 27, wherein the control unit displays a standby screen on the game apparatus of which player has completed the operation inputs of the stage early, so as to perform chat communication with the game apparatuses of the other players.

31. The match game processing system according to claim 27, wherein the game signifies a game of moving a moving object on a predetermined course by hitting the moving object from a start position to an endposition of the course, and wherein the stage signifies a stage of moving the moving object by hitting the moving object.

32. The match game processing system according to claim 31, wherein the control unit forcibly terminates the game in the game apparatus of a player, of which scored number of strokes exceeds a stroke limit of the game which is determined based on the number of strokes scored by the execution of another player having moved to the end position of the course earlier.

33. The match game processing system according to claim 31, wherein the control unit forcibly terminates the game executed in the game apparatus of a player of which scored number of strokes exceeds a stroke limit being set to the course.

34. The match game processing system according to claim 31, wherein the control unit displays a moving state of the moving object two-dimensionally on the course perspective, so as to perform the simple display.

35. A match game processing system in which a game apparatus executes a game program using a virtual space, having a plurality of players participating therein, according to operation inputs from a player, and outputs a match game result from a result of the game program execution,
wherein said match game apparatus comprises:
a communication unit acquiring ghost data representing past execution results of a plurality of stages of the game program;
a display unit instructing each player to perform the operation inputs, on a stage-by-stage basis of the game program having the plurality of stages executed separately, and outputting the execution results; and
a control unit executing the game program on said stage-by-stage basis, based on the operation inputs from the player,
and wherein the control unit simply displays the past execution results of each game stage based on the acquired ghost data, according to the result of the game program execution in the each stage.

36. The match game processing system according to claim 35, wherein the control unit displays at least a state at the time of starting each stage, and a state of the execution result of the stage, so as to perform the simple display.

37. The match game processing sys tem according to claim 35, wherein the game signifies a game of moving a moving object on a predetermined course by hitting the moving object from a startposition to an endposition of the course, and wherein the stage signifies a stage of moving the moving object by hitting the moving object.

38. The match game processing system according to claim 37, wherein the control unit displays a moving state of the moving object two-dimensionally on the course perspective, so as to perform the simple display.

39. The match game processing system according to claim 35, wherein the control unit externally registers a history of the execution result of the player obtained in the game apparatus, as the ghost data.
